(19) **Europäisches Patentamt / European Patent Office / Office européen des brevets**

(11) **EP 4 022 349 B1**

(12) # FASCICULE DE BREVET EUROPEEN

(45) Date de publication et mention de la délivrance du brevet:
**29.10.2025  Bulletin 2025/44**

(21) Numéro de dépôt: **20775040.7**

(22) Date de dépôt: **26.08.2020**

(51) Classification Internationale des Brevets (IPC):
**G01S 13/75** *(2006.01)*     **G01S 13/87** *(2006.01)*

(52) Classification Coopérative des Brevets (CPC):
**G01S 13/75; G01S 13/878**

(86) Numéro de dépôt international:
**PCT/FR2020/051500**

(87) Numéro de publication internationale:
**WO 2021/038167 (04.03.2021 Gazette 2021/09)**

(54) **PLATEAU DE COMMUNICATION EN CHAMP PROCHE ET PROCÉDÉ DE LOCALISATION SUR LEDIT PLATEAU**

NAHFELD-KOMMUNIKATIONSOBERFLÄCHE UND VERFAHREN ZUR ORTUNG AUF DER OBERFLÄCHE

NEAR-FIELD COMMUNICATION SURFACE AND METHOD FOR LOCATING ON SAID SURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **29.08.2019  FR 1909528**

(43) Date de publication de la demande:
**06.07.2022  Bulletin 2022/27**

(73) Titulaire: **Centiloc**
**13590 Le Canet de Meyreuil (FR)**

(72) Inventeurs:
 • **PALMADE, Romain**
   **13390 Auriol (FR)**

 • **HENNINOT, Loïc**
   **13821 La Penne sur Huveaune (FR)**
 • **BONNIN, Frédérick**
   **13790 Rousset (FR)**

(74) Mandataire: **Brun, Philippe Alexandre Georges**
**Med'inVent Consulting**
**Espace Mistral - Bât.A**
**297 avenue du Mistral**
**ZI ATHELIA IV**
**13705 La Ciotat Cedex (FR)**

(56) Documents cités:
**EP-A1- 0 737 933      WO-A1-2013/126391**
**US-A1- 2019 146 051**

**Description**

Domaine Technique

La présente invention se rapporte à un plateau de communication en champ proche et à un procédé de localisation sur ledit plateau. L'invention permet de localiser sur un plateau de communication en champ proche une ou plusieurs étiquettes électroniques ou dispositifs d'identifications placés sur ledit plateau.

Arrière-Plan Technologique

Le repérage automatique d'objet dans une zone donnée peut se faire de différentes manières. En matière d'antivol électronique, il est connu de placer des bornes électromagnétiques en sortie de magasin et d'équiper des produits d'un dispositif antivol comprenant un circuit résonnant accordé sur la fréquence du champ électromagnétique desdites bornes. Dès lors qu'un dispositif antivol est placé dans le champ produit par les bornes électromagnétiques, celui-ci se met à résonner et crée une perturbation importante dans le champ électromagnétique. Cette perturbation se trouve être aisément détectable et permet de localiser un dispositif antivol présent dans une zone déterminée. Cependant un tel procédé de repérage ne permet pas d'identifier de manière exacte un objet associé audit dispositif.

Deux technologies plus récentes permettent une identification plus précise d'objet. Les technologie RFID (de l'anglais Radio Frequency Identification) et NFC (de l'anglais Near Field Communication) utilisent une puce électronique couplée à une antenne qui permet de communiquer avec un lecteur tout en utilisant le champ électrique ou magnétique produit par le lecteur pour alimenter la puce électronique. Ces deux technologies permettent d'envoyer un identifiant, généralement unique, à un lecteur dès lors que l'objet d'identification se trouve dans le champ de communication du lecteur, permettant d'identifier un objet de manière précise dans une zone déterminée sans que l'objet d'identification ou l'étiquette électronique ne dispose d'une source d'énergie intrinsèque. La technologie RFID utilise un champ électrique qui permet de communiquer à quelques mètres avec un ou plusieurs objets d'identification sans permettre de pouvoir localiser précisément un objet. La technologie NFC utilise un champ magnétique qui permet de communiquer à quelques centimètres du lecteur.

Parmi les applications de localisation d'objet, il existe des besoins particuliers qui demandent une grande précision de localisation et d'identification d'objet. A titre d'exemple, dans le domaine des jeux interactifs, il existe un besoin de repérage de pièces de jeu sur un plateau de jeu. Le brevet US 5,853,327 et la demande de brevet EP-A-0 737 933 divulguent un plateau de jeu utilisant une matrice d'antennes magnétiques entrecroisées et des pièces de jeu disposant de circuits résonnants accordés sur différentes fréquences. Grâce à un balayage de fréquence réalisé successivement avec chaque antenne, il est possible de localiser chaque pièce de jeu disposée sur le plateau. Un tel système nécessite d'avoir des circuits résonnants spécifiques pour chaque pièce à repérer sur le plateau de jeu.

La demande FR-A-2 860 985 divulgue l'utilisation d'un plateau de jeu disposant d'une matrice de lecteurs de technologie NFC chacun couvrant une très petite partie du plateau afin de repérer une étiquette électronique s'y trouvant. Pour obtenir de la précision sur le positionnement, il est nécessaire de réduire la taille de chaque antenne pour en placer le plus grand nombre possible. En outre le nombre de lecteurs est proportionnel au nombre d'antennes, ce qui est relativement coûteux.

Le brevet US 10,090,888 utilise également la technologie NFC mais avec des antennes entrecroisées ce qui permet de réduire le nombre d'antennes et de lecteurs. En outre, pour affiner la position par rapport à une antenne, ce brevet divulgue une mesure du taux de modulation réalisé par l'étiquette électronique pour en extraire une distance relative. Une telle méthode est relativement complexe à mettre au point et peut donc se révéler assez couteuse si l'on souhaite une grande précision de localisation.

La demande de brevet US 2019/0146051 divulgue un système de localisation NFC sur un plateau de jeu disposant d'une antenne maître qui alimente des tags NFC et d'une pluralité d'antennes de réception disposées en matrice pour recevoir la réponse des tags. L'utilisation d'une antenne maître et d'une pluralité d'antenne de réception permet de réaliser une lecture plus rapide en interrogeant tous les tags en même temps.

En termes d'application, il existe également un besoin de repérage d'objet sur une étagère ou un présentoir de magasin. Ce type d'application a pour but d'avertir le commerçant lorsqu'un présentoir est vide pour le réassortir. Généralement ce type d'application se contente de simples détecteurs de présence d'objets qui ont l'inconvénient de donner des fausses informations lorsqu'un ou plusieurs produits sont reposés par un client sur un emplacement erroné. Il existe également des solutions de type RFID pour ce type d'application, notamment pour assurer une gestion de stock, néanmoins, les solutions RFID ne permettent pas d'avoir une grande précision sur la localisation exacte des produits sur un présentoir ou dans un rayonnage.

Il existe donc un besoin pour permettre de repérer de manière précise sur un plateau de jeu ou sur un présentoir une pièce ou un produit avec une grande précision et à faible coût.

Résumé de l'Invention

L'invention propose d'améliorer un plateau de communication en champ proche muni de plusieurs antennes. L'invention réalise une interrogation successive d'une ou plusieurs étiquettes électroniques d'identification à l'aide de chacune des antennes. Les réponses obtenues des étiquettes électroniques d'identification sont ensuite utilisées pour déterminer la position desdites étiquettes électroniques d'identification sur ledit plateau de communication. Afin de simplifier le processus de localisation mis en œuvre par ledit plateau de communication, un procédé mis en œuvre exploite une comptabilisation d'un nombre de réponses émises par les étiquettes électroniques d'identification pour déterminer les positions respectives desdites étiquettes électroniques d'identification.

Selon un premier mode de réalisation, l'invention propose un plateau de communication en champ proche destiné à communiquer avec au moins une étiquette électronique d'identification. Ledit plateau comporte une première pluralité d'antennes, au moins un circuit lecteur d'étiquettes électroniques et une unité de traitement. Chaque antenne, de la première pluralité d'antennes, a une position selon un premier axe qui correspond au flux maximal de l'antenne selon ledit premier axe. Le au moins un circuit lecteur d'étiquettes électroniques est relié auxdites antennes pour alimenter lesdites antennes et communiquer avec ladite au moins une étiquette électronique d'identification. L'unité de traitement contrôle les antennes et le au moins un circuit lecteur d'étiquettes électroniques et est agencée pour activer une seule antenne à la fois et ledit au moins un circuit lecteur afin de communiquer avec ladite au moins une étiquette électronique d'identification. L'unité de traitement est configurée pour envoyer des commandes à destination d'au moins une étiquette électronique d'identification à l'aide de chacune des antennes afin de localiser une position de ladite au moins une étiquette électronique d'identification selon le premier axe en fonction d'un nombre de réponses de ladite au moins une étiquette électronique d'identification.

Préférentiellement, lorsque le nombre de réponse est utilisé pour la localisation de l'étiquette électronique d'identification, l'unité de traitement peut être configurée pour envoyer, par l'intermédiaire du au moins un circuit lecteur et de chacune des antennes, un nombre prédéterminé de commandes à destination de l'au moins une étiquette électronique d'identification ; compter le nombre de réponses reçues en réponse par chaque antenne ; et calculer la position de l'au moins une étiquette électronique d'identification en faisant une moyenne des positions des antennes pondérées par le nombre de réponses reçues par chaque antenne.

Selon une variante, l'unité de traitement peut être configurée pour contrôler la puissance d'émission dudit circuit lecteur de sorte que le nombre prédéterminé de commandes soit envoyé à l'aide d'un nombre prédéterminé de puissance d'émission.

Afin de permettre une location de l'étiquette en deux dimensions, le plateau de communication peut comporter en outre une deuxième pluralité d'antennes, chaque antenne ayant une position selon un deuxième axe qui correspond au flux maximal de l'antenne selon ledit deuxième axe, le deuxième axe étant sécant au premier axe, ladite deuxième pluralité d'antennes étant reliées à l'au moins un circuit lecteur d'étiquettes électroniques et contrôlées par l'unité de traitement. L'unité de traitement peut être configurée pour localiser une position de ladite au moins une étiquette électronique d'identification selon le deuxième axe en fonction d'un nombre de réponses de ladite au moins une étiquette électronique d'identification.

Selon une variante, les antennes de la première pluralité peuvent être de forme allongée selon la deuxième direction et les antennes de la deuxième pluralité peuvent être de forme allongée selon la première direction, lesdites première et deuxième pluralités d'antennes couvrant une surface sensiblement égale à une surface dudit plateau et étant superposées permettant ainsi de localiser l'au moins une étiquette électronique d'identification sur la totalité dudit plateau selon le premier et le deuxième axe.

Afin d'éviter des perturbations dans les mesures, chaque antenne peut comporter au moins un interrupteur de shunt mettant l'antenne en court-circuit lorsqu'il est fermé. Lorsqu'une antenne est sélectionnée, le au moins un interrupteur de shunt peut être ouvert et, lorsqu'une antenne n'est pas sélectionnée le au moins un interrupteur de shunt peut être fermé.

Pour réduire le coût du plateau, l'au moins un circuit lecteur peut comporter un seul circuit de modulation et de démodulation relié à chaque antenne de la première et/ou deuxième pluralité d'antennes. Chaque antenne peut comporter deux interrupteurs de liaison pour la relier au seul circuit lecteur. Lorsqu'une antenne est sélectionnée, les interrupteurs de liaison peuvent être fermés et, lorsqu'une antenne n'est pas sélectionnée, les interrupteurs de liaison peuvent être ouverts.

Selon un deuxième mode de réalisation, l'invention propose un procédé de localisation d'une étiquette électronique d'identification sur un plateau de communication en champ proche, ledit plateau comportant une pluralité d'antennes, chaque antenne ayant une position selon un axe qui correspond au flux maximal de l'antenne selon ledit axe, et au moins un circuit lecteur d'étiquettes électroniques relié auxdites antennes pour alimenter lesdites antennes et communiquer avec ladite étiquette électronique d'identification. Le procédé comporte les étapes consistant à :

- envoyer à l'aide d'une antenne sélectionnée, parmi la pluralité d'antennes, une commande à destination de l'étiquette électronique d'identification,

- recevoir une réponse de l'étiquette électronique d'identification et mémoriser la réponse ou la non réponse de l'étiquette par l'antenne sélectionnée,
- répéter les étapes consistant à envoyer une commande et recevoir une réponse jusqu'à ce que chacune de la pluralité d'antennes ait envoyée au moins une commande,
- calculer une position de l'étiquette électronique d'identification en fonction d'un nombre de réponses de l'étiquette électronique.

Selon un premier mode de réalisation, les étapes consistant à envoyer une commande et recevoir une réponse peuvent être répétées jusqu'à ce que chacune de la pluralité d'antennes ait envoyé un nombre prédéterminé de commandes à destination de l'étiquette électronique d'identification. L'étape consistant à recevoir une réponse peut comptabiliser le nombre de réponses reçues. L'étape consistant à calculer la position de l'étiquette électronique d'identification peut déterminer la position de l'étiquette électronique d'identification en faisant une moyenne des positions des antennes pondérées par le nombre de réponses reçues.

En variante, le nombre prédéterminé de commandes peut être envoyé à l'aide d'un nombre prédéterminé de puissance d'émission.

Brève Description des figures

L'invention sera mieux comprise et d'autres caractéristiques et avantages de celle-ci apparaîtront à la lecture de la description suivante de modes de réalisation particuliers de l'invention, donnés à titre d'exemples illustratifs et non limitatifs, et faisant référence aux dessins annexés, parmi lesquels :

[Fig.1] montre un premier exemple de plateau de communication comprenant un réseau d'antennes compatible avec l'invention,

[Fig.2] montre un deuxième exemple de plateau de communication comprenant un réseau d'antennes compatible avec l'invention,

[Fig.3] montre un troisième exemple de plateau de communication comprenant un réseau d'antennes compatible avec l'invention,

[Fig.4] montre un premier schéma fonctionnel et électrique utilisable selon l'invention avec les réseaux d'antennes des figures 1 à 3,

[Fig.5] montre un deuxième schéma fonctionnel et électrique utilisable selon l'invention avec les réseaux d'antennes des figures 1 à 3,

[Fig.6] montre un organigramme fonctionnel d'un premier exemple de procédé de localisation d'étiquettes électroniques mis en œuvre par ledit plateau, selon l'invention,

[Fig.7] illustre un comptage de réponses reçues permettant une localisation d'étiquettes électronique selon le procédé de la figure 6,

[Fig.8] illustre des produits disposés sur un plateau de communication,

[Fig.9] montre un organigramme fonctionnel d'un deuxième exemple de procédé de localisation d'étiquettes électroniques mis en œuvre par ledit plateau, selon l'invention,

[Fig.10] illustre un comptage de réponses reçues permettant une localisation d'étiquettes électroniques selon le procédé de la figure 9,

Description détaillée

Par communication en champ proche, le présent document fait référence à la technologie NFC limitée à quelques centimètres, et utilisant des antennes réalisées à l'aide de boucles conductrices formant des demi-transformateurs aussi bien du côté du lecteur que du côté de l'étiquette électronique. La communication ainsi réalisée se fait par l'intermédiaire d'un champ magnétique couplant l'antenne d'émission du lecteur et l'antenne de récupération d'énergie d'une étiquette électronique.

Par étiquette électronique, le présent document fait référence à un dispositif d'identification comportant une puce électronique couplée à une antenne formant une bobine et s'autoalimentant par le champ magnétique créé par le lecteur. Un tel dispositif d'identification a généralement la forme d'une étiquette qui peut être facilement fixée sur de nombreux types d'emballages ou de produits. Néanmoins l'invention ne se limite pas à un facteur de forme de type « étiquette » et peut par exemple avoir la forme d'un grain de riz ou tout autre forme de dispositif électronique.

Avant d'expliquer en détails le fonctionnement de la localisation d'une étiquette, il convient tout d'abord de rappeler le fonctionnement d'une communication en champ proche entre un lecteur et une étiquette électronique. Le lecteur dispose d'une antenne, comportant une ou plusieurs spires, accordée sur une fréquence de résonnance qui correspond à la fréquence du champ magnétique émis, par exemple 13,56 mégahertz. Le courant électrique parcourant les spires de l'antenne du lecteur crée un champ magnétique rayonnant à proximité de l'antenne. L'étiquette électronique dispose d'une antenne, comportant une ou plusieurs spires, accordée sur le champ magnétique émis par le lecteur. Lorsque l'étiquette électronique est dans le champ magnétique du lecteur, l'antenne de l'étiquette électronique rentre en résonnance et transforme le champ magnétique qu'elle reçoit. Si le champ magnétique est suffisamment important, l'antenne de l'étiquette électronique peut alimenter la puce de ladite étiquette. La communication entre le lecteur et l'étiquette électronique se fait par modulation du champ magnétique. Du côté du lecteur, la modulation du champ se fait en modulant le courant envoyé à l'antenne et donc le champ émis. Du côté de l'étiquette électronique, la modulation se fait en accordant et en désaccordant l'antenne de l'étiquette électronique réalisant une perturbation modulée du champ magnétique également appelée rétromodulation. La perturbation modulée du champ magnétique se traduit par une modulation du courant circulant dans l'antenne du lecteur que celui-ci peut démoduler. Pour plus de détails, l'homme du métier peut se reporter à la norme ISO14443 qui définit le fonctionnement des communications en champ proche.

Pour que la communication s'établisse entre le lecteur et l'étiquette électronique, il faut que l'étiquette électronique soit suffisamment proche du lecteur pour recevoir un champ magnétique d'une puissance suffisante pour alimenter la puce de l'étiquette électronique. La distance permettant la communication entre le lecteur et l'étiquette électronique dépend du dimensionnement des antennes du lecteur et de l'antenne de l'étiquette électronique mais aussi de la puissance d'émission du lecteur. En utilisant une faible puissance d'émission du côté du lecteur, une étiquette électronique peut n'être détectée que si celle-ci est très proche de l'antenne d'émission, voire uniquement si l'étiquette électronique est superposée à l'antenne d'émission.

C'est en utilisant ce principe que l'on peut localiser une étiquette électronique sur un plateau de communication disposant de plusieurs lecteurs sur ledit plateau.

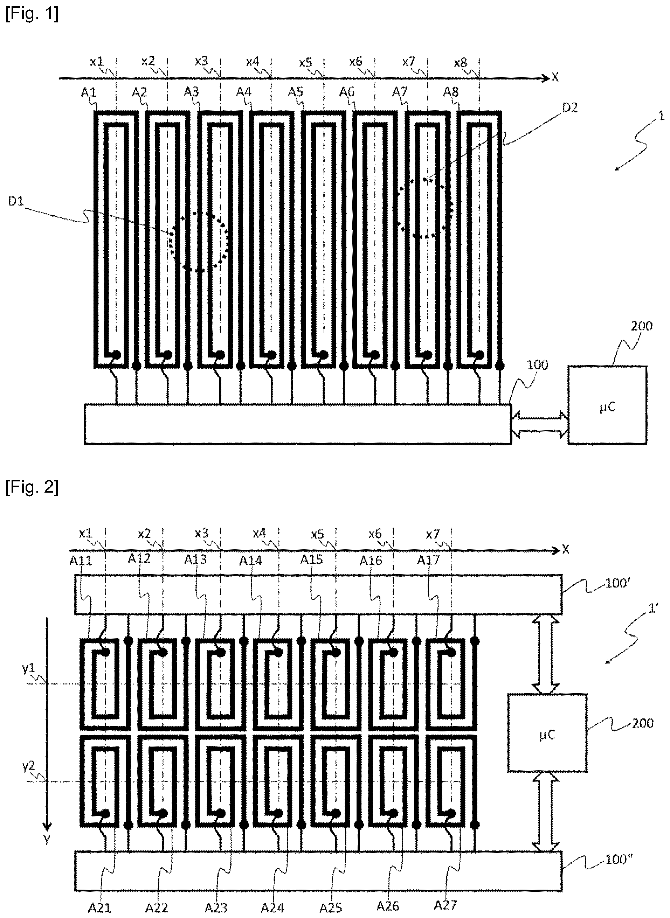

La figure 1 illustre un premier exemple de plateau de communication 1 destiné à localiser une ou plusieurs étiquettes électroniques selon un seul axe X. un tel plateau de communication 1 peut être un plateau de jeu, un présentoir, une étagère ou tout autre élément plat destiné à recevoir des étiquettes électroniques ou des produits comportant des étiquettes électroniques. A cet effet, le plateau de communication 1 comporte une pluralité d'antennes A1 à A8 coplanaires placés les unes à côté des autres selon l'axe X. LES antennes sont préférentiellement alignées selon l'axe X. Le plateau de communication 1 comporte également un bloc lecteur 100, connecté aux antennes A1 à A8, et une unité de traitement 200 reliée au bloc lecteur 100. L'unité de traitement 200 dispose par ailleurs d'une interface de communication non représentée pour pouvoir transmettre les informations de localisation à un ordinateur distant non représenté.

Chaque antenne A1 à A8 comporte une ou plusieurs spires destinées à émettre un champ magnétique lorsque celles-ci sont parcourues par un courant électrique. Le courant électrique circulant dans chaque antenne A1 à A8 est fourni par le bloc lecteur 100 sous le contrôle de l'unité de traitement 200. Lorsqu'une antenne A1 à A8 est alimentée par le circuit lecteur 100, un champ magnétique est émis par ladite antenne A1 à A8 et l'intensité du champ magnétique est maximale au centre de ses spires. L'intensité maximale du champ magnétique de chaque antenne A1 à A8 projetée sur l'axe X définit la position de ladite antenne A1 à A8 sur l'axe X. Ainsi chaque antenne A1 à A8 est associée à une position x1 à x8 sur l'axe X.

Le principe de fonctionnement d'un système de communication en champ proche avec localisation d'une étiquette électronique consiste à contrôler l'alimentation de chaque antenne A1 à A8 de sorte qu'une seule antenne A1 à A8 sélectionnée émette un champ magnétique à un instant donné. Si une étiquette électronique placée sur le plateau de communication 1 est suffisamment proche d'une antenne sélectionnée A1 à A8, alors une communication entre l'antenne A1 à A8 sélectionnée et l'étiquette électronique s'établit. Suivant la forme et la position de l'antenne de l'étiquette électronique, et également suivant la puissance d'émission, une ou plusieurs des antennes A1 à A8 peuvent communiquer avec ladite étiquette. Il sera détaillé plus loin comment déterminer la position de l'étiquette électronique.

Pour pouvoir localiser en deux dimensions la position d'une étiquette sur un plateau de communication sensiblement plan, il convient de disposer d'antennes permettant de repérer une étiquette selon deux axes sécants et préférentiellement perpendiculaires. La figure 2 illustre un deuxième exemple de plateau de communication 1' destiné à localiser une ou plusieurs étiquettes électroniques selon un premier axe X et un deuxième axe Y coplanaire et, par exemple, orthogonal au précédent. A cet effet, le plateau de communication 1' comporte une pluralité d'antennes A11 à A27 disposée en matrice comportant des antennes disposées en ligne selon le premier axe X et en colonne selon le deuxième axe Y. Le plateau de communication 1' comporte également deux blocs lecteurs 100' et 100", connectés aux antennes A11 à A17, d'une part, et A21 à A27, d'autre part. Plus simplement, ce deuxième exemple revient à dupliquer le premier exemple autant de fois qu'il y a de lignes d'antennes. Le plateau de communication 1' comporte également une unité de traitement 200 reliée aux blocs lecteurs 100 pour contrôler ceux-ci et sélectionner une antenne d'émission.

Le point d'intensité maximale du champ magnétique de chaque antenne A11 à A27 projetée sur le premier axe X définit la position de ladite antenne A11 à A27 sur le premier axe X. Le point d'intensité maximale du champ magnétique de chaque antenne A11 à A27 projetée sur le deuxième axe Y définie la position de ladite antenne A11 à A27 sur le deuxième axe Y. Ainsi chaque antenne A11 à A27 est associée à une position x1 à x7 sur le premier axe X et une position y1 à y2 sur le deuxième axe Y.

Le principe de localisation d'une étiquette électronique dans ce deuxième exemple est le même que dans le premier exemple. Toutefois, la communication réalisée entre chacune des antennes A11 à A27 et l'étiquette électronique est à utiliser pour déterminer la position de l'étiquette électronique sur chacun des premier et deuxième axes X et Y, comme il sera expliqué plus loin dans la description.

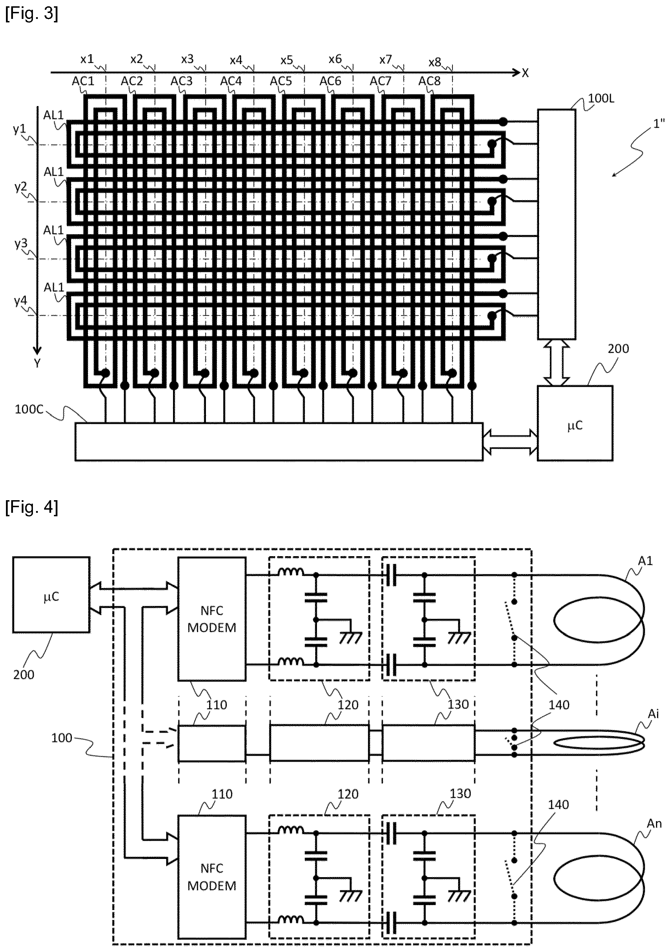

La figure 3 illustre un troisième exemple de plateau de communication 1" destiné à localiser une ou plusieurs étiquettes électroniques selon un premier axe X et un deuxième axe Y coplanaires et sécants. A cet effet, le plateau de communication 1" comporte une première pluralité d'antennes AC1 à AC8 placées les unes à côté des autres selon le premier axe X et une deuxième pluralité d'antennes AL1 à AL4 placées les unes à côté des autres selon le deuxième axe Y. La première pluralité d'antenne AC1 à AC8 et la deuxième pluralité d'antennes AL1 à AL4 sont superposées et occupent sensiblement la même surface qui correspond à la surface du plateau de communication 1". Le plateau de communication 1" comporte également un premier bloc lecteur 100L, connecté à la première pluralité d'antennes AC1 à AC8, un deuxième bloc lecteur 100C, connecté à la deuxième pluralité d'antennes AL1 à AL4, et une unité de traitement 200 reliée aux premier et deuxième blocs lecteurs 100L et 100C. Plus simplement, ce troisième exemple revient à dupliquer le premier exemple en superposant les antennes qui sont orientées selon les deux axes X et Y.

Pour la première pluralité d'antennes AC1 à AC8, l'intensité maximale du champ magnétique de chaque antenne AC1 à AC8 projetée sur le premier axe X définit la position de ladite antenne AC1 à AC8 sur ledit premier axe X. Ainsi, chacune de la première pluralité d'antennes AC1 à AC8 est associée à une position x1 à x8 sur le premier axe X. Pour la deuxième pluralité d'antennes AL1 à AL4, l'intensité maximale du champ magnétique de chaque antenne AL1 à AL4 projetée sur le deuxième axe Y définit la position de ladite antenne AL1 à AL4 sur ledit deuxième axe Y. Ainsi, chacune de la deuxième pluralité d'antennes AL1 à AL4 est associée à une position y1 à y4 sur le deuxième axe Y.

Le principe de localisation d'une étiquette électronique dans ce troisième exemple correspond à une duplication du premier exemple selon deux axes différents. Néanmoins, la localisation réalisée pour les première et deuxième pluralités d'antennes AC1 à AC8 et AL1 et AL4 doit se faire de manière successive comme il sera expliqué plus loin dans la description.

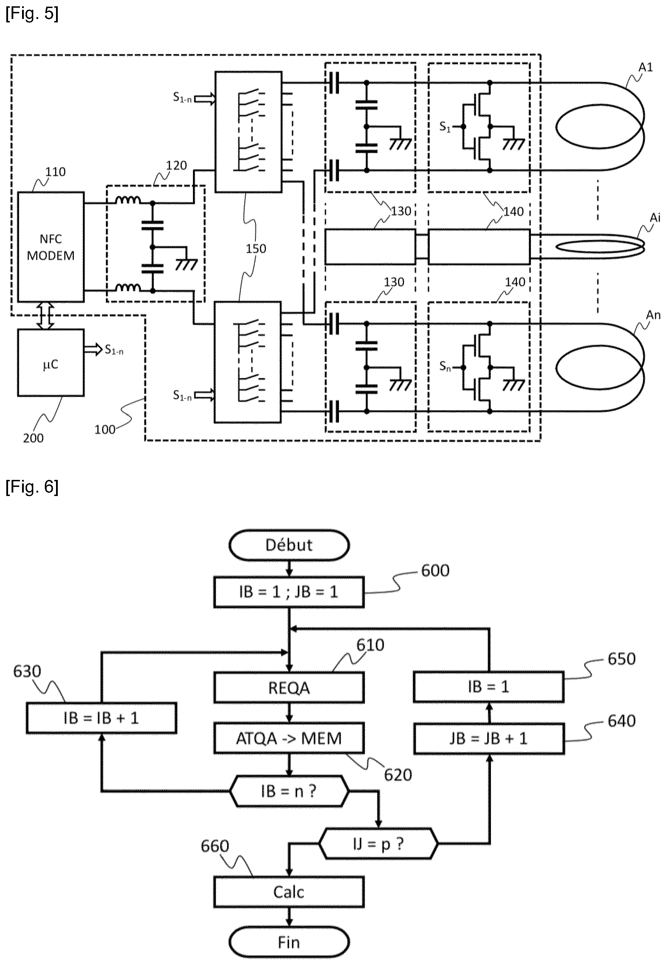

Quel que soit l'exemple de plateau de communication 1, 1' ou 1" mis en œuvre, la sélection de l'antenne A1 à A8, A11 à A27, AC1 à AC8 ou AL1 à AL4 est réalisée conjointement par le bloc lecteur 100, 100', 100", 100L ou 100C contrôlé par l'unité de traitement 200. Les figures 4 et 5 détaillent deux modes de réalisation possible du bloc lecteur. Pour simplifier la représentation, les figures 4 et 5 reprennent les références indiquées sur la figure 1 mais pourrait aussi bien reprendre les références des figures 2 ou 3. En outre, seules trois antennes sont représentées, l'homme du métier comprendra qu'une partie du circuit n'est pas représentée dans un but de simplification et qu'il suffit de dupliquer les éléments représentés.

Sur la figure 4, le bloc lecteur 100 comporte, pour chaque antenne A1, Ai ou An un circuit de modulation et de démodulation (MODEM) 110, un filtre EMC 120 (de l'anglais ElectroMagnetic Compatibility) et un circuit d'accord 130. Le circuit d'accord 130 est couplé à l'antenne A1, Ai ou An afin de former un circuit résonnant accordé sur la fréquence du champ magnétique. Le filtre EMC 120 est placé entre le circuit MODEM 110 et le circuit d'accord 130. Le filtre EMC 120 est par exemple réalisé à l'aide de deux circuits LC constituant un filtre passe-bande centré sur la fréquence du champ magnétique afin de ne laisser passer qu'une bande de fréquence étroite centrée sur la fréquence du champ magnétique. Le circuit EMC 120 supprime les éventuelles images de modulation et également les parasites reçus par l'antenne. Le circuit d'accord 130, placé entre l'antenne A1 à An et le filtre EMC 120, est constitué de condensateurs ayant pour fonction de former avec l'antenne A1 à An un circuit résonnant à la fréquence du champ magnétique. Le dimensionnement des composants du circuit EMC 120 et du circuit d'accord 130 est réalisé conjointement afin que l'ensemble formé par l'antenne A1 à An, le circuit d'accord 130 et le circuit EMC soit lui-même un circuit résonnant à la fréquence du champ magnétique. Le circuit MODEM 110 est l'élément actif qui fournit la fréquence porteuse du champ magnétique, module ledit champ lorsqu'un message est à envoyer et démodule les messages émis par l'étiquette électronique et reçus par l'antenne. Les circuits MODEM 110 associés respectivement aux antennes A1 à An sont reliés à l'unité de traitement 200 via un bus de communication.

L'unité de traitement 200 est par exemple un microcontrôleur ou un microprocesseur disposant d'une mémoire volatile et d'une mémoire non volatile. La mémoire non volatile comporte des programmes qui, lorsqu'ils sont exécutés, permettent de gérer l'envoi et la réception de messages avec une étiquette électronique et également de mettre en œuvre un procédé de localisation de l'étiquette électronique. L'unité de traitement 200 peut sélectionner, via le bus de communication, un seul circuit MODEM 110 de sorte que seule l'antenne A1 à An associée au circuit MODEM 110 sélectionné soit active. Lorsqu'un circuit MODEM 110 est actif, il fournit à l'antenne A1 à An un signal électrique, via le filtre EMC 120 et le circuit d'accord 130. Le signal électrique est un signal variable, à la fréquence du champ magnétique, que l'antenne transforme en champ magnétique. Pour envoyer un message, l'unité de traitement 200 envoie une commande de modulation suivie du train binaire à envoyer au circuit MODEM 110 sélectionné. Le circuit MODEM 110 encode le train binaire en bande de base, puis module le signal électrique fourni à l'antenne, ce qui a pour effet de moduler le champ magnétique. Lorsqu'une étiquette électronique module le champ magnétique, l'antenne A1 à An sélectionnée transforme la modulation du champ magnétique en modulation du signal électrique qui la traverse. Le circuit MODEM 110 démodule le signal électrique et décode un message qu'il retransmet à l'unité de traitement 200.

Lorsqu'un circuit MODEM 110 et son antenne A1 à An associée ne sont pas sélectionnés, aucune émission n'est réalisée par l'antenne. Suivant le type de circuit MODEM 110, les sorties du circuit MODEM 110 peuvent être reliées à la masse ou mise en haute impédance. Si la sortie du circuit MODEM 110 est mise en haute impédance, les antennes voisines d'une antenne sélectionnée peuvent se mettre en résonnance par couplage électromagnétique, une telle résonnance a pour effet d'augmenter la portée du champ magnétique de l'antenne sélectionnée et améliore les communications avec une étiquette électronique. Or, la localisation de l'étiquette se fait en considérant une limite de portée de l'antenne sélectionnée. Afin d'éviter une résonnance non souhaitée, on peut placer un interrupteur de shunt 140 en parallèle sur l'antenne A1 à An pour courtcircuiter l'antenne A1 à An lorsque celle-ci n'est pas sélectionnée.

La figure 5 montre un mode de réalisation qui n'utilise qu'un seul circuit MODEM 110 et un seul filtre EMC 120 pour toutes les antennes A1 à An. Un tel mode de réalisation est moins coûteux que le mode de réalisation de la figure 4. En outre, l'utilisation d'un seul circuit MODEM 110 permet d'assurer plus facilement une puissance de modulation identique pour chaque antenne A1 à An en réponse à une commande de l'unité de traitement 200. Le filtre EMC 120 est relié à la pluralité de circuits d'accord 130 par l'intermédiaire de deux séries d'interrupteurs de liaison 150 correspondant par exemple à des multiplexeurs analogiques. Les interrupteurs de liaison 150 sont commandés par l'unité de traitement 200 à l'aide de n signaux de commande $S_1$ à $S_n$ (également noté $S_{1-n}$) dont un seul est actif. L'un des signaux de commande $S_{1-n}$ est actif pour fermer les interrupteurs de liaison 150 correspondant à l'antenne A1 à An sélectionnée, les autres interrupteurs de liaison 150 restant ouverts, les antennes A1 à An non sélectionnées étant mises en haute impédance. Afin d'éviter un couplage des antennes A1 à An non sélectionnées par résonnance, des interrupteurs de shunt 140 sont placés en parallèle sur chacune des antennes A1 à An. Les interrupteurs de shunt 140 sont contrôlés par les mêmes signaux de commande $S_1$ à $S_n$ que les interrupteurs de liaison 150 mais de manière inversée de sorte que, lorsqu'une antenne A1 à An est sélectionnée, l'interrupteur de shunt 140 qui lui est associé est ouvert, et lorsqu'une antenne A1 à An n'est pas sélectionnée, l'interrupteur de shunt 140 qui lui est associé est fermé.

Un premier procédé de localisation mis en œuvre par l'unité de traitement 200 est décrit en faisant référence à la figure 6 et correspond à un mode de localisation réalisé en fonction d'un nombre de réponses d'une étiquette électronique. Lorsque le programme correspondant au procédé de localisation d'étiquettes est mis en œuvre par l'unité de traitement 200, l'unité de traitement initialise le procédé, dans une étape 600, en mettant à la valeur « 1 » deux indices de boucles IB et JB. Puis, dans une étape 610, l'unité de traitement 200 sélectionne une antenne correspondant à l'indice IB pour interroger une étiquette, par exemple à l'aide d'une commande REQA telle que définie dans la norme ISO14443 afin de recevoir une réponse ATQA indiquant le numéro d'identification de l'étiquette. Si une réponse ATQA est reçue, une étape 620, réalisée par l'unité de traitement 200, mémorise l'identifiant de l'étiquette électronique qui a répondu avec l'indice IB qui correspond à l'antenne A1 à An qui a reçu ladite réponse ATQA. Si aucune réponse ATQA n'est reçue dans un délai d'attente de réception, alors l'unité de traitement 200 mémorise au cours de l'étape 620 qu'aucune réponse d'étiquette n'est reçu. Le principe mis en œuvre dans ce premier exemple est relatif à une réponse non systématique de l'étiquette électronique. En effet, l'étiquette électronique s'alimentant sur le champ magnétique, celle-ci doit emmagasiner une certaine énergie pour pouvoir répondre. Une étiquette qui n'est pas placée de manière optimale par rapport au champ magnétique peut ne pas disposer d'une énergie suffisante pour répondre systématiquement à une commande.

A cet effet, le procédé mis en œuvre par l'unité de traitement 200 consiste à envoyer, lors de l'étape 610, une commande avec chaque antenne A1 à An. L'unité de traitement 200 contrôle le circuit MODEM 110 pour envoyer une commande REQA sur une antenne A1 à An à une puissance qui ne permet pas à une étiquette électronique de répondre si celle-ci se trouve à une distance supérieure à une distance prédéterminée. Si l'étiquette électronique est placée à une distance inférieure à la distance prédéterminée, l'énergie reçue par ladite étiquette peut ne pas être suffisante pour une réponse systématique, par exemple si celle-ci n'est pas placée de manière optimale par rapport à l'antenne sélectionnée. Au cours de l'étape 620, lorsqu'une réponse ATQA est reçue par une antenne A1 à An, le circuit MODEM 110 transmet la réponse à l'unité de traitement 200 qui identifie l'étiquette électronique dans la réponse ATQA afin de mémoriser les réponses reçues par chacune des antennes A1 à An. Les étapes 610 et 620 sont répétées après incrémentation de l'indice IB, au cours d'une étape 630, jusqu'à ce que l'indice atteigne une valeur « n » correspondant au nombre d'antennes A1 à An. Lorsque les étapes 610 et 620 ont été réalisées « n » fois l'indice JB est incrémenté dans une étape 640 et l'indice IB est réinitialisé à la valeur « 1 » afin de réinterroger toutes les antennes A1 à An. Toutes ces étapes 610 à 650 sont répétées jusqu'à ce que l'indice JB atteigne une valeur « p » correspondant à un nombre maximum d'interrogations réalisées par toutes les antennes. Ainsi, chaque antenne A1 à An a envoyé p commandes REQA et les réponses ATQA, s'il y en a eu, ont toutes été mémorisées par l'unité de traitement 200. L'unité de traitement 200 effectue alors une étape 660 de calcul de position des étiquettes détectées.

Selon une variante, l'ordre de sélection des antennes peut varier pour l'envoi des commandes REQA de sorte que les conditions de charge préalable d'une étiquette varient. En effet, une étiquette qui a été chargée dispose d'une capacité de maintien de charge pendant environ dix microsecondes. Si l'interrogation par une antenne voisine se fait trop rapidement, c'est-à-dire avant que l'étiquette électronique n'ait eu le temps de se décharger, alors l'étiquette interrogée a besoin d'accumuler moins d'énergie qu'une étiquette qui n'était pas chargée. Faire varier l'ordre d'interrogation peut permettre de s'affranchir de ce phénomène de charge résiduelle et donc de raccourcir le temps séparant l'envoi d'une commande par une autre antenne. Pour faire varier l'ordre d'interrogation, une table de correspondance ayant en entrées les indices IB et JB peut donner un indice d'antenne différent de l'indice IB.

A titre d'exemple, deux étiquettes électroniques D1 et D2 sont placées sur le réseau d'antennes A1 à A8 de la figure 1 la valeur « n » étant fixée à la valeur « 8 ». L'étiquette électronique D1 est placée à cheval sur les antennes A2 et A3 et reçoit un flux magnétique plus important de l'antenne A3 que de l'antenne A2. L'étiquette électronique D2 est placée sur l'antenne A7 légèrement décalée vers l'antenne A6. La puissance du circuit MODEM 110 est fixée par l'unité de traitement 200 de sorte que la distance prédéterminée soit égale à l'espacement séparant deux antennes. La valeur « p » est par exemple fixée à la valeur « 10 », et les réponses reçues sont accumulées pour chaque antenne A1 à A8.

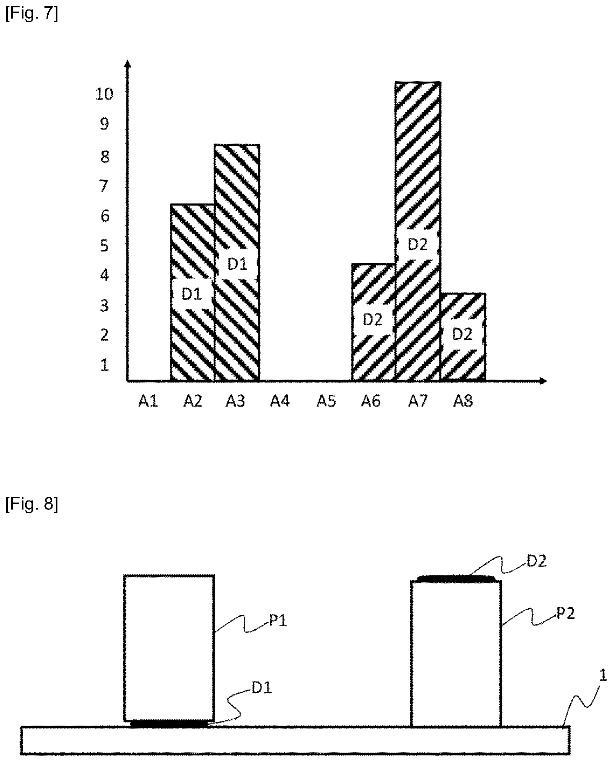

La figure 7 illustre graphiquement, à titre d'exemple non limitatif, un nombre de réponses ATQA reçues desdites étiquettes D1 et D2. L'antenne A2 a reçu six réponses ATQA de l'étiquette D1 et l'antenne A3 a reçu huit réponses ATQA de l'étiquette D1. L'antenne A6 a reçu quatre réponses ATQA de l'étiquette D2, l'antenne A7 a reçu dix réponses ATQA de l'étiquette D2 et l'antenne A8 a reçu huit réponses ATQA de l'étiquette D2. Pour obtenir la position de l'étiquette D1 ou D2, l'unité de traitement 200 calcule, au cours de l'étape 660, une moyenne sur la position des antennes A1 à A8 pondérée par le nombre de réponses reçues par exemple à l'aide de la formule suivante :

[Math 1]

$$x(Dj) = \frac{\sum_{i=1}^{n}(Ri(Dj)*xi)}{\sum_{i=1}^{n}Ri(Dj)}$$

avec x(Dj) correspondant à la position d'une étiquette Dj, n le nombre d'antennes, Ri(Dj) le nombre de réponses ATQA reçues par une antenne Ai provenant de l'étiquette Dj et xi la position de l'antenne Ai.

A titre d'exemple, si les positions d'antennes A1 à A8 sont espacées de quatre centimètres et que l'antenne A1 correspond à l'origine de l'axe X, les positions x1 à x8 des antennes A1 à A8 correspondant respectivement à 0, 4, 8, 12, 16, 20, 24 et 28 centimètres par rapport à l'origine. En considérant les réponses ATQA représentées sur la figure 6, l'application de la formule précédente donne la position x(D1) à 6,28 centimètres de l'origine et la position x(D2) à 23,76 centimètres de l'origine. Une telle méthode comporte une marge d'erreur qui dépend de la puissance du champ magnétique, de la distance pouvant séparer la surface du plateau de la position de l'étiquette, de l'orientation de l'étiquette et, plus généralement, du coefficient de couplage entre une antenne A1 à A8 du plateau de communication 1 et une antenne d'étiquette électronique D1 ou D2.

Pour obtenir une localisation en deux dimensions de la position de l'étiquette, il convient d'effectuer la même opération sur l'axe Y. Pour le plateau de communication 1' de la figure 2, les réponses d'une antenne A11 à A27 doivent être considérées selon le premier axe X et selon le deuxième axe Y afin d'effectuer une moyenne pondérée selon chacun des axes. Selon un mode de réalisation, il est possible d'avoir recours à deux indices IB, l'un pour les lignes et l'autre pour les colonnes. Selon un autre mode de réalisation, la valeur « n » peut être égale au nombre total d'antennes et l'antenne est sélectionnée à l'aide d'une table de correspondance en fonction de l'indice IB. Quel que soit le mode de sélection, les formules suivantes peuvent être utilisées à titre d'exemple :

[math 2]

$$x(Dj) = \frac{\sum_{i=1}^{n}\sum_{k=1}^{m}(Rik(Dj)*xi)}{\sum_{i=1}^{n}\sum_{k=1}^{m}Rik(Dj)} \; ; \; y(Dj) = \frac{\sum_{i=1}^{n}\sum_{k=1}^{m}(Rik(Dj)*yk)}{\sum_{i=1}^{n}\sum_{k=1}^{m}Rik(Dj)}$$

avec x(Dj) correspondant à la position d'une étiquette Dj selon le premier axe X, y(Dj) correspondant à la position de l'étiquette Dj selon le deuxième axe Y, n le nombre d'antennes selon le premier axe X, m le nombre d'antennes selon le deuxième axe Y, xi la position d'une antenne Aik selon le premier axe X, yk la position de l'antenne Aik selon le deuxième axe Y et Rik(Dj) le nombre de réponses ATQA reçues par l'antenne Aik placée à la position xi et yk provenant de l'étiquette Dj.

Pour le plateau de communication 1" de la figure 3, le calcul de la position d'une étiquette selon le premier axe se fait en ne considérant que les réponses reçues par la première pluralité d'antennes AC1 à AC8 et le calcul de la position d'une étiquette selon le deuxième axe se fait en ne considérant que les réponses de la deuxième pluralité d'antennes AL1 à AL4. Comme précédemment, il est possible d'avoir recours à un ou deux indice IB pour balayer la sélection des antennes. Le calcul de la position peut, par exemple, être obtenu à partir des formules suivantes :

[math 3]

$$x(Dj) = \frac{\sum_{i=1}^{n}(RCi(Dj)*xi)}{\sum_{i=1}^{n}RCi(Dj)} \; ; \; y(Dj) = \frac{\sum_{k=1}^{m}(RLk(Dj)*yk)}{\sum_{k=1}^{m}RLk(Dj)}$$

avec x(Dj) correspondant à la position d'une étiquette Dj selon le premier axe X, y(Dj) correspondant à la position de l'étiquette Dj selon le deuxième axe Y, n le nombre d'antennes selon le premier axe X, m le nombre d'antennes selon le deuxième axe Y, xi la position de l'antenne ACi selon le premier axe X, yk la position de l'antenne ALk selon le deuxième axe Y, RCi(Dj) le nombre de réponses ATQA reçues par l'antenne ACi placée à la position xi provenant de l'étiquette Dj et RLk(Dj) le nombre de réponses ATQA reçues par l'antenne ALk placée à la position yk provenant de l'étiquette Dj.

Ainsi, il est possible de localiser assez facilement une étiquette électronique placée sur un plateau de communication à l'aide de la commande REQA et de la réponse associée ATQA. Le même mécanisme peut être utilisé avec d'autres commandes définies dans la norme ISO14443, tel que par exemple la commande WUPA.

Le procédé de localisation de la figure 6 a été décrit en ayant qu'une seule étiquette électronique dans le champ magnétique d'une antenne. Il est également possible d'appliquer le procédé de localisation avec plusieurs étiquettes électroniques présentes dans le champ magnétique d'une antenne. Les étapes 610 et 620 doivent être adaptées en conséquence. Dans le cas où plusieurs étiquettes sont présentes dans le champ d'une antenne du plateau de communication, la réponse ATQA indique un début d'identifiant commun à toutes les étiquettes présentes dans le champ magnétique de l'antenne qui ont suffisamment d'énergie pour répondre. En effet, lorsqu'une étiquette détecte que la réponse ATQA n'est pas conforme à ce qu'elle module, ce qui est le cas dès lors que plusieurs étiquettes modulent différemment un même bit, l'étiquette électronique stoppe la modulation. L'unité de traitement 200 recevant via le circuit MODEM 110 un identifiant incomplet effectue alors une boucle d'anticollision telle que définie dans la norme ISO14443 en remplacement des étapes 610 et 620. L'unité de traitement 200 envoie une commande de sélection SEL contenant le début de l'identifiant reçu avec un bit supplémentaire fixé à 1 puis à 0 afin de sélectionner un nombre plus réduit d'étiquettes électroniques. Si une seule étiquette est sélectionnée, la réponse SAK envoyée par l'étiquette contient l'identifiant de l'étiquette. Si plusieurs étiquettes sont sélectionnées, la réponse SAK est incomplète et l'opération de sélection est répétée sur un autre bit de l'identifiant. L'opération de sélection est ainsi répétée jusqu'à l'identification complète de toutes les étiquettes présentes dans le champ de l'antenne. Les identifiants des étiquettes détectées sont mémorisés par l'unité de traitement 200 au fur et à mesure du déroulement de la boucle d'anticollision. Pour plus de détails sur le mécanisme d'anticollision, l'homme du métier peut se reporter à la norme ISO 14443.

Le procédé décrit précédemment utilise une faible puissance du circuit MODEM 110 qui est, par exemple, limitée à une distance séparant deux antennes. Dans le cas où le plateau de communication est utilisé comme présentoir de produits, il est possible que l'antenne de l'étiquette électronique soit placée sur le dessus d'un emballage et donc à quelques centimètres du présentoir. Afin de permettre la détection d'une étiquette plus éloignée, il est possible d'utiliser une puissance d'émission plus élevée permettant de lire une étiquette électronique par exemple à une distance double de celle indiquée précédemment. L'utilisation d'un champ magnétique plus puissant peut entrainer une détection par un nombre d'antenne beaucoup plus important si l'étiquette électronique est proche du plateau. Notamment, le nombre d'antennes recevant des réponses ATQA à toutes les commandes REQA peut augmenter, ce qui peut nuire à sa précision. Afin d'améliorer la portée de détection d'étiquettes électroniques sans perdre en précision, le procédé décrit précédemment est modifié en utilisant une puissance variable.

La figure 8 montre le plateau de communication 1 utilisé comme présentoir de produits sur lequel deux produits P1 et P2 ont été placés. Chacun des produits P1 et P2 dispose sur le bas de son emballage d'une étiquette électronique D1 et D2 respectivement. Néanmoins, le produit P2 a été malencontreusement placé à l'envers sur le plateau de communication 1. Ainsi, l'étiquette D2 est placée à distance dudit plateau 1. En termes de positionnement sur le plateau de communication de 1, on suppose que le placement des étiquettes D1 et D2 est similaire à celui montré sur la figure 1. A titre d'exemple, on considère que la distance entre le plateau de communication 1 et l'étiquette D2 est comprise entre une et deux fois la distance séparant deux antennes A1 à A8.

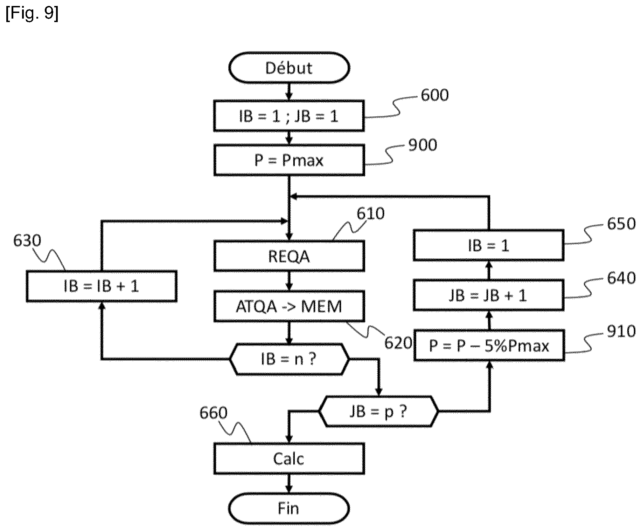

Dans cette amélioration du procédé de localisation, l'unité de traitement 200 contrôle la puissance d'émission du circuit MODEM 110 pour que chaque détection soit faite à une puissance différente. Le procédé de localisation illustré par la figure 9 reprend les mêmes étapes que le procédé décrit en lien avec la figure 6 en rajoutant toutefois une étape 900 d'initialisation au cours de laquelle l'unité de traitement 200 initialise la puissance d'émission du circuit MODEM 110 à une puissance maximale Pmax. A titre d'exemple, la puissance maximale est fixée afin de permettre de détecter une étiquette jusqu'à deux fois la distance séparant deux antennes A1 à A8 voisines l'une de l'autre. L'unité de traitement 200 réalise ensuite les étapes 610 à 620 à l'aide de chacune des antennes A1 à A8. Puis, lors de l'incrémentation de l'indice JB, l'unité de traitement 200 réduit la puissance d'émission du circuit MODEM 110, dans une étape 910. A titre d'exemple, la puissance est réduite de cinq pour cent pour une valeur « p » de l'indice JB égale à « 10 ». L'homme du métier pourra considérer une puissance maximale et une puissance minimale d'émission et effectuer une réduction progressive de la puissance de la puissance maximale à la puissance minimale en fonction du nombre d'interrogations effectuées par chaque antenne, c'est-à-dire de la valeur « p ». Selon une variante, il est possible de prévoir une étape 900 consistant à initialiser la puissance d'émission à une puissance minimale et une étape 910 consistant à augmenter progressivement la puissance jusqu'à la puissance maximale.

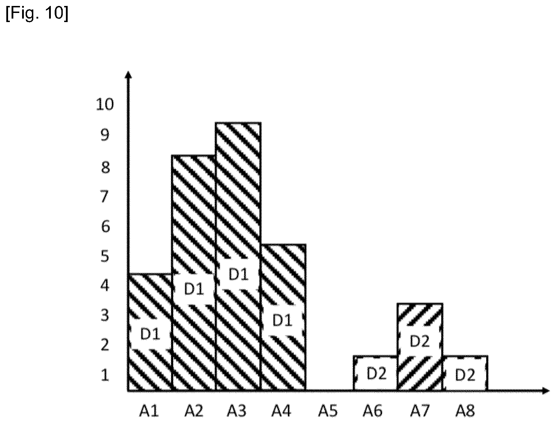

La figure 10 illustre graphiquement, à titre d'exemple non limitatif, un nombre de réponses ATQA reçues desdites étiquettes électroniques D1 et D2 par chacune des antennes A1 à A8. L'antenne A1 a reçu quatre réponses ATQA de l'étiquette électronique D1, l'antenne A2 a reçu huit réponses ATQA de l'étiquette électronique D1, l'antenne A3 a reçu neuf réponses ATQA de l'étiquette électronique D1 et l'antenne A4 a reçu 5 réponses ATQA de l'étiquette électronique D1. L'antenne A6 a reçu une réponse ATQA de l'étiquette électronique D2, l'antenne A7 a reçu trois réponses ATQA de l'étiquette électronique D2 et l'antenne A8 a reçu une réponse ATQA de l'étiquette électronique D2. Pour obtenir la position de l'étiquette électronique D1 ou D2, l'unité de traitement 200 calcule une moyenne sur la position des antennes A1 à A8 pondérée par le nombre de réponses reçues comme expliqué précédemment. A titre d'exemple, si les positions d'antennes A1 à A8 sont espacées de quatre centimètres et que l'antenne A1 correspond à l'origine de l'axe X, les positions x1 à x8 des antennes A1 à A8 sont respectivement positionnées à 0, 4, 8, 12, 16, 20, 24 et 28 centimètres de l'origine. En considérant les réponses ATQA représentées sur la figure 8, la position x(D1) est calculée à 6,31 centimètres de l'origine et la position x(D2) à 24 centimètres de l'origine. L'homme du métier peut remarquer que ces mesures sont différentes mais voisines des mesures effectuées précédemment avec une détection améliorée.

Les exemples de réalisation décrits ont fait référence à des dispositifs sans contact dit de type A dans la norme ISO14443. Les dispositifs de type A correspondent à des étiquettes électroniques disposant d'un circuit électronique simplifié n'ayant pour but que de renvoyer un identifiant. Les dispositifs de type A, de par le faible coût de leur circuit électronique, sont très utilisés pour le marquage et l'identification de produits commerciaux et peuvent également être utilisés dans les pièces d'un jeu utilisant un plateau de jeu communicant. Toutefois, il est également possible d'appliquer la localisation de position par comptage du nombre de réponses à des dispositifs de type B en utilisant des commandes équivalentes et une gestion anticollision adaptée au type B. En effet, les étapes 610 et 620 peuvent être remplacées par une détection globale d'étiquette électronique de type A ou de type B, l'important étant d'identifier une étiquette électronique dans le champ d'une antenne et de compter le nombre de réponses de chaque étiquette vis-à-vis de chaque antenne.

Dans les exemples des figures 2 et 3, les antennes sont représentées selon deux axes perpendiculaires. L'homme du métier comprendra qu'il n'est pas nécessaire de placer ces axes perpendiculairement l'un par rapport à l'autre et pourra adapter le positionnement des axes en fonction de ses besoins. De même, deux axes sont normalement suffisant pour localiser une étiquette sur une surface plane. Pour améliorer la précision de localisation, il est possible d'utiliser trois ou quatre axes sécants.

**Revendications**

1. Plateau de communication en champ proche (1, 1', 1") destiné à communiquer avec au moins une étiquette électronique d'identification (D1, D2), ledit plateau comportant :

   - une première pluralité d'antennes (A1-A8, Ai, An, A11-A27, AC1-AC8), chaque antenne ayant une position (x1-x8, xi) selon un premier axe (X) qui correspond au flux maximal de l'antenne selon ledit premier axe (X),
   - au moins un circuit lecteur d'étiquettes électroniques (100, 100', 100", 100C) relié auxdites antennes (A1-A8, Ai, An, A11-A27, AC1-AC8) pour alimenter lesdites antennes et communiquer avec ladite au moins une étiquette électronique d'identification (D1, D2),
   - une unité de traitement (200) contrôlant les antennes (A1-A8, Ai, An, A11-A27, AC1-AC8) et le au moins un circuit lecteur d'étiquettes électroniques (100, 100', 100", 100C) et étant agencée pour activer une seule antenne à la fois et ledit au moins un circuit lecteur afin de communiquer avec ladite au moins une étiquette électronique d'identification (D1, D2),

**caractérisé en ce que** l'unité de traitement (200) est configurée pour envoyer des commandes à destination d'au moins une étiquette électronique d'identification (D1, D2) à l'aide de chacune des antennes (A1-A8, Ai, An, A11-A27, AC1-AC8) afin de localiser une position (x(Dj)) de ladite au moins une étiquette électronique d'identification (D1, D2) selon le premier axe (X) en fonction d'un nombre de réponses (Ri, Rik, RCi) de ladite au moins une étiquette électronique identification (D1, D2).

2. Plateau de communication en champ (1, 1', 1") proche selon la revendication 1, dans lequel l'unité de traitement (200) est configurée pour

   - envoyer par l'intermédiaire du au moins un circuit lecteur (100, 100', 100", 100C) et de chacune des antennes (A1-A8, Ai, An, A11-A27, AC1-AC8) un nombre prédéterminé (p) de commandes à destination de l'au moins une étiquette électronique d'identification (D1, D2),
   - compter le nombre de réponses reçues (TR, TRi, TRik, TRCi) en réponse par chaque antenne (A1-A8, Ai, An, A11-A27, AC1-AC8), et
   - calculer la position (x(Dj)) de l'au moins une étiquette électronique d'identification (D1, D2) en faisant une moyenne des positions (x1-x8, xi) des antennes pondérées par le nombre de réponses reçues (TR, TRi, TRik, TRCi) par chaque antenne.

3. Plateau de communication en champ proche (1, 1', 1") selon la revendication 2, dans lequel l'unité de traitement (200) est configurée pour contrôler la puissance d'émission dudit circuit lecteur de sorte que le nombre prédéterminé de commandes soit envoyé à l'aide d'un nombre prédéterminé de puissance d'émission.

4. Plateau de communication en champ proche (1', 1") selon l'une des revendications 1 à 3, lequel plateau de communication comporte en outre :

   - une deuxième pluralité d'antennes (A11-A27, AL1-AL4), chaque antenne ayant une position (y1-y4, yk) selon un deuxième axe (Y) qui correspond au flux maximal de l'antenne selon ledit deuxième axe (Y), le deuxième axe (Y) étant sécant au premier axe (X), ladite deuxième pluralité d'antennes (A11-A27, AL1-AL4) étant reliées à l'au moins un circuit lecteur d'étiquettes électroniques (100', 100", 100L) et contrôlées par l'unité de traitement (200), et dans lequel l'unité de traitement (200) est configurée pour localiser une position (y(DJ)) de ladite au moins une étiquette électronique d'identification (D1, D2) selon le deuxième axe (Y) en fonction d'un nombre de réponses (Rik, RLi) de ladite au moins une étiquette électronique d'identification (D1, D2).

5. Plateau de communication en champ proche (1") selon la revendication 4, dans lequel les antennes de la première pluralité (AC1-AC8) sont de forme allongée selon la deuxième direction (Y) et les antennes de la deuxième pluralité (AL1-AL4) sont de forme allongée selon la première direction (X), lesdites première et deuxième pluralités d'antennes (AC1-AC8, AL1-AL4) couvrant une surface sensiblement égale à une surface dudit plateau (1") et étant superposées permettant ainsi de localiser l'au moins une étiquette électronique d'identification (D1, D2) sur la totalité dudit plateau selon le premier et le deuxième axe (X, Y).

6. Plateau de communication en champ proche selon l'une des revendications 1 à 5, dans lequel chaque antenne (A1, Ai, An) comporte au moins un interrupteur de shunt (140) mettant l'antenne (A1, Ai, An) en court-circuit lorsqu'il est fermé, et dans lequel, lorsqu'une antenne est sélectionnée, le au moins un interrupteur de shunt (140) est ouvert et, lorsqu'une antenne n'est pas sélectionnée le au moins un interrupteur de shunt (140) est fermé.

7. Plateau de communication en champ proche (1, 1', 1") selon l'une des revendications 1 à 6, dans lequel l'au moins un circuit lecteur (100) comporte un seul circuit de modulation et de démodulation (110) relié à chaque antenne de la première et/ou deuxième pluralité d'antennes, dans lequel chaque antenne comporte deux interrupteurs de liaison (150) pour la relier au seul circuit lecteur (110), et dans lequel, lorsqu'une antenne est sélectionnée, les interrupteurs de liaison (150) sont fermés et, lorsqu'une antenne n'est pas sélectionnée, les interrupteurs de liaison (150) sont ouverts.

8. Procédé de localisation d'une étiquette électronique d'identification (D1, D2) sur un plateau de communication en champ proche (1, 1', 1"), ledit plateau comportant une pluralité d'antennes (A1-A8, Ai, An, A11-A27, AC1-AC8, AL1-AL4), chaque antenne ayant une position (x1-x8, xi, y1-y4, yk) selon un axe (X, Y) qui correspond au flux maximal de l'antenne selon ledit axe (X, Y), et au moins un circuit lecteur d'étiquettes électroniques (100, 100', 100", 100C, 100L) relié auxdites antennes pour alimenter lesdites antennes et communiquer avec ladite étiquette électronique d'identification (D1, D2), **caractérisé en ce que** le procédé comporte les étapes consistant à :

- envoyer (610, 1210) à l'aide d'une antenne sélectionnée, parmi la pluralité d'antennes (A1-A8, Ai, An, A11-A27, AC1-AC8, AL1-AL4), une commande à destination de l'étiquette électronique d'identification (D1,D2),
- recevoir (620, 1220) une réponse de l'étiquette électronique d'identification et mémoriser la réponse ou la non réponse de l'étiquette par l'antenne sélectionnée,
- répéter les étapes consistant à envoyer une commande et recevoir une réponse jusqu'à ce que chacune de la pluralité d'antennes (A1-A8, Ai, An, A11-A27, AC1-AC8, AL1-AL4) ait envoyée au moins une commande,
- calculer (660, 1240) une position de l'étiquette électronique d'identification (D1, D2) en fonction d'un nombre de réponses (Ri, Rik, RCi) de l'étiquette électronique (D1, D2).

9. Procédé selon la revendication 8, dans lequel les étapes consistant à envoyer (610) une commande et recevoir (620) une réponse sont répétées jusqu'à ce que chacune de la pluralité d'antennes (A1-A8, Ai, An, A11-A27, AC1-AC8, AL1-AL4) ait envoyé un nombre prédéterminé (p) de commandes à destination de l'étiquette électronique d'identification (D1, D2), dans lequel l'étape consistant à recevoir (620) une réponse comptabilise le nombre de réponses reçues (Ri, Rik, RCi, RLk) et dans lequel l'étape consistant à calculer (660) la position de l'étiquette électronique d'identification (D1, D2) détermine la position (x(Dj), y(Dj)) de l'étiquette électronique d'identification (D1, D2) en faisant une moyenne des positions (x1-x8, xi, y1-y4, yk) des antennes pondérées par le nombre de réponses reçues (Ri, Rik, RCi, RLk).

10. Procédé selon la revendication 9, dans lequel le nombre prédéterminé de commandes est envoyé à l'aide d'un nombre prédéterminé de puissance d'émission.

**Patentansprüche**

1. Nahfeldkommunikationsplattform (1, 1', 1"), die zum Kommunizieren mit mindestens einer elektronischen Identifikationskennung (D1, D2) bestimmt ist, die Plattform umfassend:

- eine erste Vielzahl von Antennen (A1-A8, Ai, An, A11-A27, AC1-AC8), wobei jede Antenne eine Position (x1-x8, xi) entlang einer ersten Achse (X) aufweist, die dem maximalen Strom der Antenne entlang der ersten Achse (X) entspricht,
- mindestens eine Schaltung (100, 100', 100", 100C) zum Lesen elektronischer Kennungen, die mit den Antennen (A1-A8, Ai, An, A11-A27, AC1-AC8) verbunden ist, um die Antennen mit Strom zu versorgen und mit der mindestens einen elektronischen Identifikationskennung (D1, D2) zu kommunizieren,
- eine Verarbeitungseinheit (200), die die Antennen (A1-A8, Ai, An, A11-A27, AC1-AC8) und die mindestens eine Schaltung (100, 100', 100", 100C) zum Lesen elektronischer Kennungen steuert und eingerichtet ist, um eine einzelne Antenne und die mindestens eine Leseschaltung gleichzeitig zu aktivieren, um mit der mindestens einen elektronischen Identifikationskennung (D1, D2) zu kommunizieren,

**dadurch gekennzeichnet, dass** die Verarbeitungseinheit (200) konfiguriert ist, um Befehle mittels jeder der Antennen (A1-A8, Ai, An, A11-A27, AC1-AC8) an mindestens eine elektronische Identifikationskennung (D1, D2) zu versenden, um eine Position (x(Dj)) der mindestens einen elektronischen Identifikationskennung (D1, D2) entlang der ersten Achse (X) abhängig von einer Anzahl von Antworten (Ri, Rik, RCi) der mindestens einen elektronischen Identifikationskennung (D1, D2) zu lokalisieren.

2. Nahfeldkommunikationsplattform (1, 1', 1") nach Anspruch 1, wobei die Verarbeitungseinheit (200) konfiguriert ist zum

- Versenden einer vorbestimmten Anzahl (p) von Befehlen an die mindestens eine elektronische Identifikationskennung (D1, D2) über die mindestens eine Leseschaltung (100, 100', 100", 100C) und jede der Antennen (A1-A8, Ai, An, A11-A27, AC1-AC8),
- Zählen der Anzahl der Antworten (TR, TRi, TRik, TRCi), die durch jede Antenne (A1-A8, Ai, An, A11-A27, AC1-AC8) als Antwort empfangen werden, und
- Berechnen der Position (x(Dj)) von mindestens einer elektronischen Identifikationskennung (D1, D2) durch Bilden eines Mittelwerts der Positionen (x1-x8, xi) der Antennen, der mit der Anzahl der Antworten (TR, TRi, TRik, TRCi), die durch jede Antenne empfangen werden, gewichtet wird.

3. Nahfeldkommunikationsplattform (1, 1', 1") nach Anspruch 2, wobei die Verarbeitungseinheit (200) konfiguriert ist, um die Sendeleistung der Leseschaltung zu steuern, so dass die vorbestimmte Anzahl von Befehlen unter Verwendung einer vorbestimmten Menge an Sendeleistung versendet wird.

4. Nahfeldkommunikationsplattform (1', 1") nach einem der Ansprüche 1 bis 3, wobei die Kommunikationsplattform ferner umfasst:

   - eine zweite Vielzahl von Antennen (A11-A27, AL1-AL4), wobei jede Antenne eine Position (y1-y4, yk) entlang einer zweiten Achse (Y) aufweist, die dem maximalen Strom der Antenne entlang der zweiten Achse (Y) entspricht, wobei die zweite Achse (Y) die erste Achse (X) schneidet, wobei die zweite Vielzahl von Antennen (A11-A27, AL1-AL4) mit der mindestens einen elektronischen Schaltung (100', 100", 100L) zum Lesen elektronischer Kennungen verbunden ist und durch die Verarbeitungseinheit (200) gesteuert wird, und wobei die Verarbeitungseinheit (200) konfiguriert ist, um eine Position (y(DJ)) der mindestens einen elektronischen Identifikationskennung (D1, D2) entlang der zweiten Achse (Y) abhängig von einer Anzahl von Antworten (Rik, RLi) der mindestens einen elektronischen Identifikationskennung (D1, D2) zu lokalisieren.

5. Nahfeldkommunikationsplattform (1") nach Anspruch 4, wobei die Antennen der ersten Vielzahl (AC1-AC8) entlang der zweiten Richtung (Y) und die Antennen der zweiten Vielzahl (AL1-AL4) entlang der ersten Richtung (X) verlängert sind, wobei die erste und die zweite Vielzahl von Antennen (AC1-AC8, AL1-AL4) eine Oberfläche bedecken, die im Wesentlichen gleich einer Oberfläche der Plattform (1") ist, und übereinander angeordnet sind, wobei so ermöglicht wird, dass mindestens eine elektronische Identifikationskennung (D1, D2) auf der gesamten Plattform entlang der ersten und der zweiten Achse (X, Y) lokalisiert wird.

6. Nahfeldkommunikationsplattform nach einem der Ansprüche 1 bis 5, wobei jede Antenne (A1, Ai, An) mindestens einen Shunt-Schalter (140) umfasst, der die Antenne (A1, Ai, An) kurzschließt, wenn er geschlossen ist, und wobei der mindestens eine Shunt-Schalter (140) geöffnet ist, wenn eine Antenne ausgewählt ist, und der mindestens eine Shunt-Schalter (140) geschlossen ist, wenn keine Antenne ausgewählt ist.

7. Nahfeldkommunikationsplattform (1, 1', 1") nach einem der Ansprüche 1 bis 6, wobei die mindestens eine Leseschaltung (100) eine einzelne Modulations- und Demodulationsschaltung (110) umfasst, die mit jeder Antenne der ersten und/oder der zweiten Vielzahl von Antennen verbunden ist, wobei jede Antenne zwei Verbindungsschalter (150) umfasst, um sie mit der einzelnen Leseschaltung (110) zu verbinden, und wobei die Verbindungsschalter (150) geschlossen sind, wenn eine Antenne ausgewählt ist, und die Verbindungsschalter (150) geöffnet sind, wenn keine Antenne ausgewählt ist.

8. Verfahren zum Lokalisieren einer elektronischen Identifikationskennung (D1, D2) auf einer Nahfeldkommunikationsplattform (1, 1', 1"), wobei die Plattform eine Vielzahl von Antennen (A1-A8, Ai, An, A11-A27, AC1-AC8, AL1-AL4) umfasst, wobei jede Antenne eine Position (x1-x8, xi, y1-y4, yk) entlang einer Achse (X, Y) aufweist, die dem maximalen Strom der Antenne entlang der Achse (X, Y) entspricht, und mindestens eine Schaltung (100, 100', 100", 100C, 100L) zum Lesen elektronischer Identifikationskennungen umfasst, die mit den Antennen verbunden ist, um die Antennen mit Strom zu versorgen und mit der elektronischen Identifikationskennung (D1, D2) zu kommunizieren, **dadurch gekennzeichnet, dass** das Verfahren die Schritte umfasst, bestehend aus:

   - Versenden (610, 1210) eines Befehls an die elektronische Identifikationskennung (D1, D2) unter Verwendung einer aus der Vielzahl von Antennen (A1-A8, Ai, An, A11-A27, AC1-AC8, AL1-AL4) ausgewählten Antenne,
   - Empfangen (620, 1220) einer Antwort von der elektronischen Identifikationskennung und Speichern der Antwort oder der Nichtantwort der Kennung durch die ausgewählte Antenne,
   - Wiederholen der Schritte, bestehend aus dem Versenden eines Befehls und dem Empfangen einer Antwort, bis jede der Vielzahl von Antennen (A1-A8, Ai, An, A11-A27, AC1-AC8, AL1-AL4) mindestens einen Befehl versendet hat,
   - Berechnen (660, 1240) einer Position der elektronischen Identifikationskennung (D1, D2) abhängig von einer Anzahl von Antworten (Ri, Rik, RCi) der elektronischen Kennung (D1, D2).

9. Verfahren nach Anspruch 8, wobei die Schritte, bestehend aus dem Versenden (610) eines Befehls und dem Empfangen (620) einer Antwort, wiederholt werden, bis jede der Vielzahl von Antennen (A1-A8, Ai, An, A11-A27, AC1-AC8, AL1-AL4) eine vorbestimmte Anzahl (p) von Befehlen an die elektronische Identifikationskennung (D1, D2) versendet hat, wobei der Schritt, bestehend aus dem Empfangen (620) einer Antwort, die Anzahl der empfangenen Antworten (Ri, Rik, RCi, RLk) erfasst, und wobei der Schritt, bestehend aus dem Berechnen (660) der Position der elektronischen Identifikationskennung (D1, D2), die Position (x(Dj), y(Dj)) der elektronischen Identifikationskennung (D1, D2) durch Bilden eines Mittelwerts der Positionen (x1-x8, xi, y1-y4, yk) der Antennen, der mit der Anzahl der empfangenen Antworten (Ri, Rik, RCi, RLk) gewichtet wird, bestimmt.

10. Verfahren nach Anspruch 9, wobei die vorbestimmte Anzahl von Befehlen unter Verwendung einer vorbestimmten Menge an Sendeleistung versendet wird.

**Claims**

1. Near-field communication surface (1, 1', 1") for communicating with at least one electronic identification tag (D1, D2), said surface comprising:

   - a first plurality of antennas (A1-A8, Ai, An, A11-A27, AC1-AC8), each antenna having a position (x1-x8, xi) along a first axis (X) corresponding to the antenna's maximum field along said first axis (X),
   - at least one electronic tag reader circuit (100, 100', 100", 100C) connected to said antennas (A1-A8, Ai, An, A11-A27, AC1-AC8) to supply said antennas and communicate with said at least one electronic identification tag (D1, D2),
   - a processing unit (200) controlling the antennas (A1-A8, Ai, An, A11-A27, AC1-AC8) and the at least one electronic tag reader circuit (100, 100', 100", 100C) and being arranged to activate one antenna at a time and said at least one reader circuit to communicate with said at least one electronic identification tag (D1, D2),

   **characterized in that** the processing unit (200) is configured to send commands to at least one electronic identification tag (D1, D2) using each of the antennas (A1-A8, Ai, An, A11-A27, AC1-AC8) in order to locate a position (x(Dj)) of said at least one electronic identification tag (D1, D2) along the first axis (X) according to a number of responses (Ri, Rik, RCi) from said at least one electronic identification tag (D1, D2).

2. Near field communication surface (1, 1', 1") according to claim 1, wherein the processing unit (200) is configured to

   - send via the at least one reader circuit (100, 100', 100", 100C) and each of the antennas (A1-A8, Ai, An, A11-A27, AC1-AC8) a predetermined number (p) of commands to the at least one electronic identification tag (D1, D2),
   - count the number of responses (TR, TRi, TRik, TRCi) received in response by each antenna (A1-A8, Ai, An, A11-A27, AC1-AC8), and
   - calculate the position (x(Dj)) of the at least one electronic identification tag (D1, D2) by averaging the positions (x1-x8, xi) of the antennas weighted by the number of responses received (TR, TRi, TRik, TRCi) by each antenna.

3. Near-field communication surface (1, 1', 1") according to claim 2, wherein the processing unit (200) is configured to control the transmission power of said reader circuit so that the predetermined number of commands is sent using a predetermined number of transmission powers.

4. Near-field communication surface (1', 1") according to one of claims 1 to 3, which communication surface further comprises:

   - a second plurality of antennas (A11-A27, AL1-AL4), each antenna having a position (y1-y4, yk) along a second axis (Y) which corresponds to the maximum field of the antenna along said second axis (Y), the second axis (Y) being secant to the first axis (X), said second plurality of antennas (A11-A27, AL1-AL4) being connected to the at least one electronic tag reader circuit (100, 100", 100L) and controlled by the processing unit (200), and wherein the processing unit (200) is configured to locate a position (y(DJ)) of said at least one electronic identification tag (D1, D2) along the second axis (Y) as a function of a number of responses (Rik, RLi) of said at least one electronic identification tag (D1, D2).

5. Near-field communication surface (1") according to claim 4, wherein the antennas of the first plurality (AC1-AC8) are elongate in shape according to the second direction (Y) and the antennas of the second plurality (AL1-AL4) are elongated in the first direction (X), said first and second pluralities of antennas (AC1-AC8, AL1-AL4) covering a surface area substantially equal to a surface area of said surface (1") and being superimposed, thus making it possible to locate the at least one electronic ID tag (D1, D2) over the entirety of said surface according to the first and second axes (X, Y).

6. Near-field communication surface according to one of claims 1 to 5, wherein each antenna (A1, Ai, An) comprises at least one shunt switch (140) short-circuiting the antenna (A1, Ai, An) when closed, and wherein, when an antenna is selected, the at least one shunt switch (140) is open and, when an antenna is not selected, the at least one shunt switch (140) is closed.

7. Near-field communication surface (1, 1', 1") according to one of claims 1 to 6, wherein the at least one reader circuit (100) comprises a single modulation and demodulation circuit (110) connected to each antenna of the first and/or second plurality of antennas, wherein each antenna comprises two link switches (150) to connect it to the single reader circuit (110), and wherein, when an antenna is selected, the link switches (150) are closed and, when an antenna is not selected, the link switches (150) are open.

8. Method of locating an electronic identification tag (D1, D2) on a near-field communication surface (1, 1', 1"), said surface comprising a plurality of antennas (A1-A8, Ai, An, A11-A27, AC1-AC8, AL1-AL4), each antenna having a position (x1-x8, xi, y1-y4, yk) along an axis (X, Y) which corresponds to the maximum flux of the antenna along said axis (X, Y), and at least one electronic tag reader circuit (100, 100', 100", 100C, 100L) connected to said antennas to supply said antennas and communicating with said electronic identification tag (D1, D2),
   **characterized in that** the method comprises the steps of:

   - sending (610, 1210) a command to the electronic identification tag (D1, D2) using a selected antenna from the plurality of antennas (A1-A8, Ai, An, A11-A27, AC1-AC8, AL1-AL4),
   - receiving (620, 1220) a response from the electronic identification tag and memorizing the tag's response or non-response by the selected antenna,
   - repeating the steps of sending a command and receiving a response until each of the plurality of antennas (A1-A8, Ai, An, A11-A27, AC1-AC8, AL1-AL4) has sent at least one command,
   - calculating (660, 1240) a position of the electronic identification tag (D1, D2) according to a number of responses (Ri, Rik, RCi) of the electronic tag (D1, D2).

9. Method according to claim 8, wherein the steps of sending (610) a command and receiving (620) a response are repeated until each of the plurality of antennas (A1-A8, Ai, An, A11-A27, AC1-AC8, AL1-AL4) has sent a predetermined number (p) of commands to the electronic identification tag (D1, D2), wherein the step of receiving (620) a response counts the number of responses received (Ri, Rik, RCi, RLk) and wherein the step of calculating (660) the position of the electronic identification tag (D1, D2) determines the position (x(Dj), y(Dj)) of the electronic identification tag (D1, D2) by averaging the positions (x1-x8, xi, y1-y4, yk) of the antennas weighted by the number of responses received (Ri, Rik, RCi, RLk).

10. The method according to claim 9, wherein the predetermined number of commands is sent using a predetermined number of transmission powers.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5853327 A
- EP 0737933 A
- FR 2860985 A
- US 10090888 B
- US 20190146051 A